# EUROPEAN PATENT SPECIFICATION

(11) **EP 0 618 769 B1**
(45) Date of publication and mention of the grant of the patent: **26.02.1997**
(21) Application number: 93900951.0
(22) Date of filing: 08.12.1992
(51) Int. Cl.: A01N 63/00, A23B 7/155, A23B 7/16

(54) **FUNGISTATIC METHOD AND COMPOSITION EMPLOYING TYPE II ENDOGLYCOSIDASES AND PEROXIDASES**
FUNGISTATISCHE VERFAHREN UND ZUSAMMENSETZUNG UNTER VERWENDUNG VON TYP II ENDOGLYCOSIDASEN UND PEROXIDASEN
PROCEDE ET COMPOSITION FUNGISTATIQUE UTILISANT DES ENDOGLYCOSIDADES DE TYPE II ET DES PEROXIDASES

(30) Priority: 10.12.1991 US 804566
(43) Date of publication of application: 12.10.1994
(60) Divisional application: 95107836.9
(73) Proprietor: GENENCOR INTERNATIONAL, INC., South San Francisco, CA 94080 (US)
(72) Inventor: ASHIZAWA, Eunice, C., Oakland, CA 94619 (US); LAD, Pushkaraj, J., San Mateo, CA 94403 (US)
(74) Representative: Brandes, Jürgen, Dr. rer. nat.
(86) International application number: US9210602
(87) International publication number: WO9311671

(56) References cited:
- EP-A- 0 184 288
- EP-A- 0 425 019
- WO-A-91/06312
- WO-A-91/06313
- CENTRAL PATENTS INDEX, BASIC ABSTRACTS JOURNAL Section Ch, Week 7929, 17 September 1979, Derwent Publications Ltd., London, GB, Class C, AN 53721B
- NATURE vol. 324, 27 November 1986, London, GB, pp. 365-367, A. SCHLUMBAUM et al.
- THE JOURNAL OF GENERAL MICROBIOLOGY vol. 134, no. 1, January 1988, pp. 169-176, W.K. ROBERTS et al.

## Description

### FIELD OF THE INVENTION

The present invention relates to a fungistatic composition comprising a Type II endoglycosidase and a peroxidase as well as to a fungistatic method utilizing such a composition.

### BACKGROUND OF THE INVENTION

Fruit, vegetable and plants are all susceptible to attack by fungi, resulting in loss of crops, decreased shelf-life of produce and ultimately higher costs for consumers. Many fungi are known pathogens in several diseases which harm or destroy crops worldwide. Examples of such fungi include, but are not limited to, Penicullium italicum, Penicillium expansum, Penicillium digitatum, Diplodia natalenses, Botrytis cinerea, Monilinia fructicola, Rhizophus stulonifer, and Rhizopus nigricans. These fungi attack such produce as citrus, apples, cherries, strawberries, nectarines, peaches, etc.

A particularly troublesome fungus has been Botrytis cinerea which causes gray-mold rot in crops such as citrus, apples, grapes, pears, strawberries and cherries. Gray-mold or fruit rot is a widespread disease resulting in severe crop losses. The rot can occur in the field, but latent infections may not become apparent until the crop has been harvested, thus resulting in decreased storage, shipping and shelf-life of the resulting produce. There is a need to develop an antifungal agent(s) useful against many fungi and particularly Botrytis, such agent to be used as a pre or post-harvest treatment of crops susceptible to such infection.

EP-A-0 184 288 describes the use of enzymes capable of degrading a protecting or supporting component of a target organism in herbicidal, insecticidal or fungicidal compositions.

WO 91/06312 discloses a method for protecting a harvested crop from pathogens comprising applying to the harvested crop and to any pathogen present thereon a compound capable of generating an active oligomer elicitor in the crop or the pathogen. The compound is applied with a penetrating agent which aids in the entry of the compound into the cuticle layer of the harvested grop or the pathogen.

WO 91/06313 discloses a method for protecting a growing crop from pathogens comprising applying to the growing crop and to an pathogen present thereon a compound capable of generating an active oligomer elicitor in the crop or the pathogen.

EP-A-0 425 019 describes antimirobial compositions comprising endo-β-N-acetylglucoseaminidase and/or endoglycopeptidase, and ruminant stomach lysozyme.

JP 54073182 (Derwent Abstract 79-53712B/29) discloses a method for preparing a bacteriolytic enzyme having broad bacteriolytic spectrum, and is useful as food antiseptics, plant pesticides, etc., by culturing bacteria belonging to Bacillus genus and capable of producing β-1,3-glucanase, protease, and lysozyme-analogue bacteriolytic enzymes.

Therefore, it is an object of this invention to provide antifungal agents useful against a variety of fungal pathogens. Another object of this invention is to provide fungistatic agents useful against Botrytis.

Further, another object of this invention is to provide methods for using such fungistatic agents.

### SUMMARY OF THE INVENTION

There is provided a fungistatic composition for inhibiting the growth of fungi, comprising (a) a Type II endoglycosidase and (b) a peroxidase as well as a fungistatic method utilitzing said composition. In one aspect of the invention, the fungistatic composition and method provide for the inhibition or delay of fungal growth. The inhibition method comprises contacting a crop infected with a fungus such as Botrytis with a fungistatic effective concentration of Type II endoglycosidase and peroxidase. The method for treating plants, fruits or vegetables comprises contacting, either pre or post-harvest, the surface of such crop with an effective amount of such fungistatic enzymes. Also provided are fungistatic compositions comprising one or more of (a) and or more Type II endoglycosidase, (b) one or more of (b) in an agriculturally acceptable carrier.

### DETAILED DESCRIPTION OF THE INVENTION

The fungistatic enzymes useful in the present invention include three classes of enzymes.

### Type II Endoglycosidases

The Type II endoglycosidases useful in the present invention are a category of endoglycosidases which are capable of cleaving specific internal glycosidic linkages found in glycoproteins. The preferred Type II endoglycosidases of the present invention are selected from the group consisting of endo-β-N-acetylglucosaminidase ("Endo") H, D, F and L, and endoglycopeptidases such as PNGase F. These enzymes are fully described in commonly-assigned EPO Publication 0425016, EPO Publication 0425017 and EPO Publication 0425018, the disclosure of which is hereby incorporated by reference.

Some known Type II endoglycosidases are listed in Table I together with the natural biological source of such enzymes. A Type II endoglycosidase not listed in Table I is the endoglycopeptidase Glycopeptidase F, also sometimes referred to as PNGase F. PNGase F may be obtained from Flavobacterium meningosepticum. It is also commercially available from Boehringer Mannheim Biochemical, Indianapolis, IN and Genzyme, Boston, MA.

**TABLE I**

| endo-β-N Acetylglycosaminidases | | |
|---|---|---|
| D | Diplococcus pneumoniae | N-linked complex type (peripheral sugars removed) |
| H | Streptomyces plicatus (Streptomyces griseus) | N-linked high-mannose and hybrid types |
| L | Streptomyces plicatus | N-linked low mol. wt. only |
| C₁ | Clostridium perfringens | N-linked complex type (peripheral sugars removed) |
| C₁₁ | Clostridium perfringens | N-linked high-mannose type |
| F-Gal type | Sporotricum dimorphosphosphorum | N-linked complex type (biantennary only, requires terminal Gal) |
| F | Flavobacterium meminogosepticum | N-linked high-mannose and complex types |
| endo-α-N-Acetylgalactosaminidase | Diplococcus pneumoniae | O-linked, only Gal-αl-3GalNacl- |
| endo-β-N-Galactosidases | Diplococcus pneumoniae | Blood group A and B determinants |
| | Escherichia freundii | Keratan sulphate and oligosaccharides containing sequence R GlcNAc-β1-3Gal-β1-4GlcNAc (or Glc) |
| | Flavobacterium keratolyticus | |

The present invention is not limited by the currently known specificity of Type II endoglycosidases. Until recently, the endoglycosidases which have been commercially available have been expensive due to their relatively low levels of expression in their naturally occurring sources. Accordingly, the reactivity of such enzymes has not been broadly investigated. However, with the advent of molecular biology and gene cloning, greater amounts of endoglycosidase have been or will be made available.

The Type II endoglycosidases used in the invention can be obtained from the organisms listed in Table I according to methods known to those skilled in the art. Some of the Type II endoglycosidases in Table I, e.g., Endo-H from Streptomyces plicatus (initially classified as Streptomyces griseus) and produced in S. plicatus or S. lividans and Endo-D from Diplococcus pneumoniae, are commercially available from Boehringer Mannheim Biochemical, Indianapolis, IN. In addition to the commercially available preparations, Endo-H may be derived from E. coli transformed with a plasmid encoding the Endo-H gene from Streptomyces plicatus and the promoter from alkaline phosphatase (Oka, T., et al., (1985) Proc. Natl. Acad. Sci. USA, 82, 7212-7216) by methods similar to that reported for the cloning and expression of Endo-H from Streptomyces plicatus in E. coli (Robbins, et al., (1981) J. Biol. Chem. 256; 10 640). See also Trumbly, R.J., et al., (1985) J. Biol. Chem., 260, 5638. Endo-H may also be derived from Streptomyces cells engineered to express Endo-H derived from Streptomyces plicatus (EPO Publication No. 0179449, April 30, 1986). Alternatively, Endo-H may be produced by any appropriate host cell such as Bacillus subtilis using techniques well known to those skilled in the art. The amino acid and DNA sequences of Endo-H for S. plicatus (S. griseus) have been published. Robbins, P.W., et al., (1984) J. Biol. Chem., 259, 7577-7583.

The Endo-H used in the examples herein was obtained from E. coli or B. subtilis hosts transformed to express Endo-H from S. plicatus.

One unit of Endo-H activity is the amount of enzyme required to release 1µmole of (³H)-dansyl-Asn-GlcNAc from (³H)-dansyl-Asn-(GlcNAc)4(Man)6 at pH 5.5 at 37°C in one minute. Tarentino, A., et al., (1978) Methods in Enzymology, 50, 574. The unit activity of other Type II endoglycosidases, including endoglycopeptidases, are similarly defined by an appropriate substrate.

### Peroxidases

Peroxidases such as lignin peroxidase (LiP) and manganese (II) peroxidase (MnP), isolated from Phanerochaete chrysosporium have been widely studied for their role in lignin biodegradation. H.E. Schoemaker, et al., Journal of Biotechnology, 13 (1990) 101-109. Because of this activity, these enzymes have been proposed to be useful in the commercial bleaching and biopulping process. Schoemaker, et al., (supra).

Many micro-organisms produce lignin degrading enzymes. Enzymes from Streptomyces viridosporus, Phanerochete chrysoporium and Trametes (Coriolus) versicolor have been studied extensively. P. chrysoporium and T. versicolor produce two heme-proteins with peroxidase activities. One enzyme is dependent on manganese (II) and is called manganese (II) peroxidase (MnP). The other is generally referred to as lignin peroxidase.

Surprisingly, it has been found that these peroxidases have a fungistatic effect, particularly against Botrytis growth. The mechanism of action of such fungistatic activity is not fully understood.

Peroxidases useful in the present invention include, but are not limited to, peroxidases isolated from the white-rot fungus Phanerochaete chrysosporium, Streptomyces viridosporus or Trametes (Coriolus) versicolor, as well as horseradish peroxidase which is commercially available from Sigma.

The MnP used in the examples herein (with no LiP activity) was obtained from Phanerochete chrysoporium by fermentation. The enzyme in the broth is extracted into polyethylene glycol (PEG) fractions (PEG saturated with water).

The compositions described herein can be formulated in a variety of physical forms, including liquids, gels, pastes and solid particles such as powders and granules. The compositions can be formulated as known by those skilled in the art of agricultural formulations and may comprise surfactants, binders, buffers, enzyme stabilizers or such other additives known to those skilled in the art. Preferred excipients include surfactants such as Triton X 100, commercially available from Rhom-Hass or Sigma and buffer systems comprising sodium acetate. The pH of the compositions is dependent on the optimum pH performance of the enzymes, preferably the compositions are at a pH +/- 1 pH unit from optimum enzyme performance. The the compositions preferably have a pH from about 3 to 11, more preferably from about 4 to 8 for good enzyme performance, it being understood that optimum enzyme performance may be a factor of what substrate the enzyme is hydrolyzing.

### Endoglycosidase and Peroxidase

Of the Type II endoglycosidases, endo-β-N-acetylglucosaminidases H, D, F and L, and endoglycopeptidase, PNGase F, are preferred for formulating fungistatic compositions and for use in the fungistatic methods herein. Endo-H is most preferred. The preferred peroxidase of the present invention is MnP.

In the fungistatic composition which comprises one or more Type II endoglycosidases and one or more peroxidases, each of the components are present at a concentration sufficient to produce a fungistatic effect. A further preferred embodiment is such a combination used for the treatment of fruit infected with Botrytis.

As used herein, a "fungistatic effect" includes the inhibition or delay of growth, change in gross morphology, protoplast formation and/or degradation of the cell wall of a fungus when contacted with a Type II endoglycosidase and a peroxidase.

As used herein, a "fungistatic method" refers to a method which produced a fungistatic effect. In one aspect of the invention, the fungistatic method causes the inhibition or delay of fungus growth, and/or changes in the gross morphology of the fungus.

The present fungistatic compositions may be used in the form of pre-or post-harvest protection of crops. Pre-harvest compositions to be applied on crops for fungal control may be in the form of a solution to be applied to crops by methods known in the art such as spraying. Post-harvest compositions to be applied to plants, fruits or vegetables for fungal control may be in the form of dips, drenches, sprays or waxes to be applied to such plant, fruits or vegetables as known to those skilled in the art.

Examples of fungal diseases and their hosts are provided in Table II.

The enzymes useful in the present invention may be active against any of the listed fungal pathogens in addition to other fungal pathogens not listed. The disclosure herein is not intended to be limiting in any way with regard to the scope of fungistatic activity of endoglycosidases, peroxidases and/or chitinases used alone or in combination.

**TABLE II**

| Blue-Mold Rot | |
|---|---|
| Citrus | (Penicillium italicum) |
| Apples | (Penicillium expansum) |
| Grapes | (Penicillium) |
| Pears | (Penicillium expansum) |
| Plums | (Penicillium) |
| Cherries | (Penicillium expansum) |

| Green-Mold Rot | |
|---|---|
| Citrus | (Penicillium digitatum) |

| Stem-End Rot | |
|---|---|
| Citrus | (Diplodia natalenses) |
| Papayas | (Diplodia natalenses) |

| Gray-Mold Rot | |
|---|---|
| Citrus | (Botrytis cinerea) |
| Apples | (Botrytis) |
| Grapes | (Botrytis cinerea) |
| Pears | (Botrytis cinerea) |
| Stawberries | (Botrytis cinerea) |
| Cherries | (Botrytis cinerea) |

| Brown Rot | |
|---|---|
| Peaches | (Monilinia fructicola) |
| Cherries | (Monilinia fructicola) |
| Apricots | (Monilinia fructicola) |
| Nectarines | (Monilinia fructicola) |

| Rhizopus Rot | |
|---|---|
| Peaches | (Rhizopus stolonifer) |
| Strawberries | (Rhizopus nigricans) |
| Plums | (Rhizopus stolonifer) |
| Cherries | (Rhizopus stolonifer) |
| Nectarines | (Rhizopus stolonifer) |
| Avocados | (Rhizopus stolonifer) |

Additionally, fungal pathogens are known to be the causative agent in several other pre and post-harvest diseases in fruits and vegetables. A discussion of certain of such disease states is set forth below, it being understood that the present invention is not limited to the fungal pathogens and/or specific fruits, vegetables or plants discussed below.

### Tomatoes and Potatoes

The most serious foliar pathogen of glasshouse tomatoes is leaf mold caused by Cladosporium fulva. It has a widespread distribution, however, and severe losses have been reported following outbreaks on field crops in tropical and sub-tropical areas.

Tomatoes and potatoes are susceptible to early blight which is caused by Alternaria solani. Severe infections may lead to defoliation, truss abortion and black rot of developing fruits. Late blight is caused by Phytophthora infestans which is also a major problem in potatoes. Phytophthora spp produce a range of symptoms on tomatoes including damping-off, root and foot rots, fruit rot and stem infections.

Anthracnose, Colletotrichum coccoides, is a major problem of tomatoes worldwide and also produces a range of symptoms which include black dot, fruit anthracnose, stem and root rot. Anthracnose is mainly a problem in field-grown tomatoes but can also occur in badly managed protected crops.

Fusarium wilt is caused by Fusarium lycopersici and is most destructive in warm climates and warm sandy soils in temperate regions. Although primarily a pathogen of field-grown tomatoes, extensive losses can occur also in protected crops. Infection with the pathogen causes severe wilting and chloroplast degradation resulting in death of the plant. Verticillium alboatrum can also produce similar symptoms, but the disease develops more slowly and causes stunting and a reduction in yield rather than death of the plant.

### Stone Fruits

Stone fruits, which include peaches, plums, apricots and cherries, are grown throughout the temperate and sub-tropical regions of the world. A number of fungal diseases can cause significant losses both in the field and in harvested produce.

Brown rot is caused by Monilinia fructicola and affects peaches, cherries, plums and apricots with equal severity. Losses occur in most stone fruit-growing regions where there is high rainfall during the ripening period of the fruit. These losses consist primarily of rotting of the fruit in the orchard, although serious losses may also appear during transit and marketing. Yields may also be reduced by destruction of the blossom. In severe infections, and in the absence of good control measures, 50 to 75 per cent of the fruit may rot on the tree and the remainder may become infected before it reaches the market.

### Grapes

Grape vines are affected by four major fungal diseases found in all grape-producing areas and these diseases can be a major constraint to production.

Powdery mildew, Uncinula necator, also infects horse chestnut and linden and is currently a major problem in Argentina, Brazil, Chile and Turkey. Severely affected young leaves become distorted and discolored and, if flowers become infected, they fail to set fruit. The development of the disease is favored by dry conditions and is the most troublesome disease on grapes in California at present. The disease is spread by air-borne conidia but overwinters either on infected material or as spores in the soil.

Downy mildew, Plasmopara viticola, is very destructive in Europe and the eastern USA, leading to crop losses of up to 75 per cent if not treated. The seriousness of this pathogen in any area or season is dependent on humidity and the frequency/duration of summer rain or heavy dews.

Although several species of fungi can cause fruit rot, grey mold caused by Botrytis cinerea is the most serious. Damage can occur to ripe grapes in the field or in transit. The pathogen is active at low temperatures and can cause appreciable losses on the harvested crop kept in cold storage. Infection generally occurs at blossoming, but the spores remain latent until the fruit begins to ripen. Free moisture on the fruit surface from rain or cracked berries is extremely conducive to the growth and development of the pathogen.

The fungus Guignardia bidwellii is present in Europe, Canada and the USA. It is probably the most serious disease of grapes wherever it occurs, particularly in warm, humid regions. In the absence of effective control, the crop may be totally destroyed through either direct rotting of the berries or blasting of the blossom clusters. Infection via ascospores and conidia occurs throughout the spring and summer, with dispersal and subsequent infection being favored by the presence of free moisture. The pathogen produces numerous red necrotic spots on young leaves which provide the inoculum for the secondary infections of berries and stems.

### Groundnuts

Kernel losses from all diseases are estimated to be approximately 20 per cent of the total yield. Losses are rarely quantified, however, mainly because of a lack of detailed information on the effects of specific pathogens on a field scale. Leaf spot, caused by Cercospora arachidicola, is a widespread disease, development being favored by warm and humid conditions. Severe infections may lead to total defoliation of the plant.

Sclerotinia sclerotiorum causes stem rot and is of major economic importance in the USA where it has been estimated that leaf spot and stem rot together account for over 50 per cent of all losses attributed to disease in groundnuts.

Rust is caused by Puccinia arachidis and appears to be increasing in importance in India and Africa. Development of the disease is enhanced by warm, humid conditions, and plants may become completely defoliated and die as a result of severe infections. Rust currently limits groundnut production in Central America and the Caribbean Islands.

Seedling rots are the major cause of gappy stands and Aspergillus spp are found in all groundnut-growing countries. Aspergillus flavus infects stored seeds and produces aflatoxin which is fatal if consumed by humans or fed to cattle and poultry as pressed cake.

### Apples and Pears

Apple crops are particularly susceptible to fungal attack in all major producing countries. Scab, caused by Venturia inaequalis, is the most important and widespread disease of apples and is currently a major problem throughout Europe and North America. Severe infections result in a reduction in photosynthetic area, extensive defoliation and reduced fruit bud development. If not controlled, losses from apple scab in a badly infected orchard may be are than 70 per cent of the total crop value. However, the severity of the disease varies from year to year with warm, wet springs favoring disease development from spores that have overwintered on the orchard floor.

Powdery mildew is caused by Podosphaera leucotricha and, under conditions which favor pathogen development, can be as damaging as scab, affecting mainly young twigs and leaves.

Newly planted trees in old orchards often fail to become well established. The causal agents of this "replant disease" have not been fully identified but in the UK, Pythium spp are thought to be involved whilst in Czechoslovakia other microorganisms have been implicated.

### Strawberries

Strawberries are a high value crop grown throughout Europe and North America and are susceptible to a number of potentially devastating diseases.

Grey mold/fruit rot is caused by Botrytis cinerea, and is a widespread disease resulting in severe crop losses in wet seasons. The rot can occur in the field, but latent infections nay not become apparent until the fruit has been harvested. Soft rot, caused by Rhizopus sp, is a major cause of crop losses, particularly in storage or in transit. When conditions are favorable, the disease can spread rapidly through storage containers and losses can be very high within a very short period of time.

Mildew, Sphaerotheca macularis, is most severe on protected crops, affecting both leaves and developing fruits which may be unmarketable.

The causal agent of wilt, Verticillium dahliae, is widespread in soils, but severe symptoms only occur in some localities, particularly on light soils. Infection results in wilting and death and is most severe in areas where adverse soil conditions favor the development of wilt.

### EXPERIMENTAL

The following is presented by way of example only and is not to be construed as limiting the scope of the invention.

### Fernbach Protocol

Examples 1-6 were carried out using the Fernbach protocol as set forth herein. Fresh strawberries (∼24 hours after picking) were obtained from a local market. In a sterile hood, strawberries were dipped into 70 mls of test solution (using a 100 ml beaker). The test solutions used for each experiment are identified in each Example. Each strawberry was dipped 10 times. Care was taken to wet the entire strawberry including the calyx. The strawberries were allowed to dry for approximately 5 minutes on an absorbent paper towel in a sterile hood with the blower on. After 5 minutes, the strawberries were put into a sterile fernbach flask covered with a sterile cotton plug and incubated at 15°C. The strawberries were placed in the fernbach so that there was a monolayer of strawberries and all of the strawberries were touching. After three days of incubation, the flasks were rated by panelists for degree of fungal contamination.

### EXAMPLE 1 (Comparative Example)

The following conditions were tested on fresh strawberries:
A) No treatment - control.
B) Buffer solution control: 1:20 dilution of 10mM TES, 85 mM NaCl pH 7.0 buffer (buffer for enzyme stock).
C) Enzyme treatment solution: 1:20 dilution of Endo-H enzyme stock including antifungal component (in 10mM TES, 85 mM NaCl pH 7.0 buffer). Final active enzyme concentration 140 ppm Endo-H.
D) Antifungal component solution: 1:20 dilution (in distilled water) of antifungal component isolated from enzyme stock.

Strawberries were incubated overnight at 25°. Panelists rated D the best, i.e., having least amount of fungal growth. The results of this experiment when viewed in light of results in subsequent experments detailed below suggest that the buffer pH (7.0) for the enzyme was not optimal and thus the antifungal component above yielded the best results.

### EXAMPLE 2 (Comparative Example)

Based on the results from Example 1, Example 1 was repeated with two variations:
1) All dilutions were made in buffer: 50 mM sodium acetate, 25 mM NaCl pH 5.5.
2) Strawberries were incubated at 15° C. for 3 days.

After 3 days incubation, panelist ranked the enzyme treatment solution (Treatment C above) as the best. After 4 days incubation, panelist had difficulty in differentiating between the buffer solution control (Treatment B) and the enzyme treatment solution (Treatment C).

Since the Endo-H treatment with the antifungal component co-purified therein was judged better than the antifungal component alone at optimal pH conditions for the enzyme, the effects are attributed to the enzyme and not to the antifungal component.

### EXAMPLE 3 (Comparative Example)

The following treatments were tested on fresh strawberries:
A) Untreated control.
B) Buffer control: 5:14 dilution of buffer for enzyme stock in 10mM sodium acetate pH 5.2.
C) Enzyme treatment: 5:14 dilution of Endo-H stock, including antifungal component, in 10mM sodium acetate pH 5.2 (final enzyme concentration 1000 ppm).
D) Inactivated enzyme treatment: 5:14 dilution of enzyme stock boiled for 10 minutes in 10 mM sodium acetate, pH 5.2.

After three days incubation, the enzyme treatment (Treatment C) showed no fungal growth and all panelists chose Treatment C as the best. The enzyme showed best performance at pH 5.2, at a concentration of 1000 ppm.

### EXAMPLE 4 (Comparative Example)

The following treatments were tested on fresh strawberries:
A) Buffer control, 20 mM sodium acetate pH 5.0.
B) Manganese (II) peroxidase treatment: 16 ppm (protein) solution in 20 mM sodium acetate pH 5.0.

Seven panelists rated the strawberries. All (7) panelists rated the MnP treatment (Treatment B) superior to the buffer control (Treatment A) in retarding fungal growth on strawberries.

### EXAMPLE 5 (Comparative Example)

Fresh strawberries were treated with the following treatments:
A) No treatment - control.
B) Buffer control: 10 mM sodium acetate, pH 5.0.
C) 1000 ppm Endo-H (produced in E. coli, without any antifungal component) in sodium acetate pH 5.0 buffer.
D) 500 ppm Endo-H (produced in E. coli, without any antifungal component) in sodium acetate pH 5.0 buffer.
E) 500 ppm Endo-H (produced in E. coli, without any antifungal component) and 16 ppm manganese (II) peroxidase in sodium acetate pH 5.0 buffer.
F) 16 ppm manganese (II) peroxidase in sodium acetate pH 5.0 buffer.
G) 500 ppm Endo-H (from Bacillus, contained antifungal molecule) in sodium acetate pH 5.0 buffer.
H) 0.01% Triton X-100 in sodium acetate pH 5.0 buffer.

Seven panelists ranked the strawberries for fungal growth. Strawberries with least fungal growth were rated best. Strawberries treated with the combination Endo-H and manganese (II) peroxidase (Treatment E) were rated as the best although manganese (II) peroxidase alone or Endo-H alone were more effective than no treatment.

### EXAMPLE 6 (Comparative Example)

Bartlet cherries were obtained from the local market. The cherries had been washed at the store with chlorine water and treated with prolidone, DCNA and mineral oil parafin. Cherries were dipped in treatment solutions described below and the experiment was carried out using the Fernabach protocol previously described. Approximately 30 cherries were included in each treatment.
A) Untreated control.
B) Buffer control, 10 mM sodium acetate pH 5.0.
C) 500 ppm Endo-H* in sodium acetate buffer pH 5.0.
D) 500 ppm Endo-H* + 16 ppm manganese (II) peroxidase in sodium acetate buffer pH 5.0.
E) 16 ppm manganese (II) peroxidase in sodium acetate buffer pH 5.0.
F) 1000 ppm Endo-H* in sodium acetate buffer pH 5.0
G) 500 ppm Endo-H* + 12.3 ppm corn chitinase in sodium acetate buffer pH 5.0.
H) 12.3 ppm corn chitinase in sodium acetate buffer pH 5.0.

*Endo-H preparation containing antifungal component

Cherries were kept in growth chambers for 5 days and then at room temperature overnight. The cherries were hard to rate because they were subject to both brown rotting and white sporulation.

Average ranking of cherries by three panelists were:
F (best)> C> G> D> B> E> A> H>.

Example 5 demonstrates that treatment of fruits with the claimed composition as compared to other treatments, gives the best results. Furthermore the composition of Example 6 demonstrates good results.

## Claims

1. A fungistatic composition comprising a Type II endoglycosidase selected from the group consisting of Endo-D, Endo-H, Endo-F, Endo-L and PNGaseF and a peroxidase selected from the group consisting of manganese (II) peroxidase, lignin peroxidase and horseradish peroxidase.

2. A fungistatic composition of claim 1 wherein Type II endoglycosidase is Endo-H and comprises 1 ppm to 1000 ppm, preferably from 100 to 1000 ppm of said composition.

3. A fungistatic composition of claim 1 wherein said peroxidase is manganese (II) peroxidase and comprises from 1 ppm to 50 ppm of said composition.

4. A fungistatic composition of claim 1 wherein said Type II endoglycosidase is Endo-H present in an amount from 1 ppm to 1000 ppm, and said peroxidase is manganese (II) peroxidase, present in an amount from 1 ppm to 50 ppm.

5. A fungistatic method comprising contacting a fungus, or a plant, fruit or vegetable containing such fungus with a fungistatic effective amount of a composition of claim 1 to 4.

## Patentansprüche

1. Fungistatische Zusammensetzung mit einer Endoglycosidase vom Typ II ausgewählt aus der Gruppe bestehend aus Endo-D, Endo-H, Endo-F, Endo-L und PNGaseF sowie einer Peroxidase, ausgewählt aus der Gruppe bestehend aus Mangan (II) Peroxidase, ausgewählt aus der Gruppe bestehend aus Mangan (II) Peroxidase, Ligninperoxidase und Meerrettichperoxidase.

2. Fungistatische Zusammensetzung nach Anspruch 1, in der die Endoglycosidase vom Typ II Endo-H ist und 1 ppm bis 1000 ppm, vorzugsweise 100 bis 1000 ppm der Zusammensetzung ausmacht.

3. Fungistatische Zusammensetzung nach Anspruch 1, in der die Peroxidase Mangan (II) Peroxidase ist und 1 ppm bis 50 ppm der Zusammensetzung ausmacht.

4. Fungistatische Zusammensetzung nach Anspruch 1, in der die Endoglycosidase vom Typ II Endo-H ist, die in einer Menge von 1 ppm bis 1000 ppm vorliegt, und daß die Peroxidase Mangan (II) Peroxidase ist, die in einer Menge von 1 ppm bis 50 ppm vorliegt.

5. Fungistatisches Verfahren, bei dem ein Fungus, eine Pflanze, eine Frucht oder ein Gemüse mit solch einem Fungus mit einer fungistatisch wirksamen Menge einer Zusammensetzung gemäß Anspruch 1 bis 4 in Kontakt gebracht wird.

## Revendications

1. Composition fongistatique comprenant une endoglycosidase de type II sélectionnée dans le groupe comprenant Endo-D, Endo-H, Endo-F, Endo-L et PNGaseF et une peroxydase sélectionnée dans le groupe comprenant la peroxydase du manganèse (II), la peroxydase de la lignine et la peroxydase du raifort.

2. Composition fongistatique de la revendication 1 où l'endoglycosidase de type II est une Endo-H et comprend entre 1 à 1,000 parties par million (100 à 1,000 parties par million de préférence) de ladite composition.

3. Composition fongistatique de la revendication 1 où ladite peroxydase est une peroxydase du manganèse (II) et comprend entre 1 et 50 parties par million de ladite composition.

4. Composition fongistatique de la revendication 1 où l'endoglycosidase de type II est une Endo-H présente dans une quantité comprise entre 1 et 1,000 parties par million et ladite peroxydase est une peroxydase du manganèse (II), présente dans une quantité comprise entre 1 et 50 parties par million.

5. Méthode fongistatique impliquant le contact d'un champignon, ou d'une plante, d'un fruit ou d'un légume contenant ce champignon, avec une quantité fongistatique efficace d'une composition de la revendication 1 à 4.
